# DEMANDE DE BREVET EUROPEEN

(11) **EP 2 722 230 A1**
(43) Date de publication de la demande: **23.04.2014**
(21) Numéro de dépôt: 13189437.0
(22) Date de dépôt: 18.10.2013
(51) Int. Cl.: B60R 5/04, B60R 13/02

(54) **Panneau de garnissage de véhicule automobile**

(30) Priorité: 18.10.2012 FR 1259955
(71) Demandeur: CENTRE D'ETUDE ET DE RECHERCHE POUR L'AUTOMOBILE (CERA), 51100 Reims (FR)
(72) Inventeur: Philippe, Benoît, 17246 Santa Cristina d'Aro (ES); Vitrant, Olivier, 51100 Reims (FR)
(74) Mandataire: Sayettat, Julien Christian

(57) **Abrégé**

L'invention concerne un panneau (1) de garnissage de véhicule automobile, ledit panneau comprenant une âme structurelle à base de matériau thermoplastique, ladite âme comprenant : un plateau supérieur (3) pourvu d'un rebord périphérique tombant (4) ; un plateau inférieur (5) ; un jeu de nervures (6) issues des faces internes desdits plateaux les reliant entre eux par soudure à distance l'un de l'autre de manière à définir un volume intérieur (7) partiellement rempli par lesdites nervures ; ledit plateau supérieur présentant une face externe revêtue d'une couche de matériau de revêtement (8), ladite couche s'étendant au delà dudit rebord pour former une bande (9) périphérique, ladite bande étant repliée vers l'intérieur et logée au moins en partie dans un espace (10) prévu en périphérie dudit volume intérieur, la périphérie (11) dudit plateau inférieur étant disposée en contact avec ladite bande de manière à masquer le bord libre (12) de ladite bande.

## Description

L'invention concerne un panneau de garnissage de véhicule automobile et un procédé de réalisation d'un tel panneau.

Il est connu de réaliser un panneau de garnissage de véhicule automobile - tel qu'un faux plancher ou une tablette de recouvrement des bagages -, ledit panneau comprenant une âme structurelle à base de matériau thermoplastique, ladite âme comprenant :
- un plateau supérieur pourvu d'un rebord périphérique tombant,
- un plateau inférieur,
- un jeu de nervures issues des faces internes desdits plateaux les reliant entre eux par soudure à distance l'un de l'autre de manière à définir un volume intérieur partiellement rempli par lesdites nervures,
ledit plateau supérieur présentant une face externe revêtue d'une couche de matériau de revêtement.

La soudure peut notamment être réalisée par friction.

Un panneau présentant une telle structure a l'avantage de bénéficier d'une très grande résistance à la flexion, ceci du fait de « l'effet poutre » mis en jeu.

Dans un tel panneau se pose le problème de disposer d'une finition périphérique de la couche de revêtement qui soit robuste et esthétique.

L'invention a pour but de proposer un panneau agencé pour offrir une telle finition périphérique.

A cet effet, et selon un premier aspect, l'invention propose un panneau de garnissage de véhicule automobile, ledit panneau comprenant une âme structurelle à base de matériau thermoplastique, ladite âme comprenant :
- un plateau supérieur pourvu d'un rebord périphérique tombant,
- un plateau inférieur,
- un jeu de nervures issues des faces internes desdits plateaux les reliant entre eux par soudure à distance l'un de l'autre de manière à définir un volume intérieur partiellement rempli par lesdites nervures,
ledit plateau supérieur présentant une face externe revêtue d'une couche de matériau de revêtement, ladite couche s'étendant au delà dudit rebord pour former une bande périphérique, ladite bande étant repliée vers l'intérieur et logée au moins en partie dans un espace prévu en périphérie dudit volume intérieur, la périphérie dudit plateau inférieur étant disposée en contact avec ladite bande de manière à masquer le bord libre de ladite bande.

Dans cette description, les termes de positionnement dans l'espace (tombant, ascendant, supérieur, inférieur,...) sont pris en référence à un panneau en position horizontale.

Par « bord libre » de la bande, on entend son bord situé à distance du rebord tombant dont est pourvu le plateau supérieur.

Dans cette description, le terme « nervure » désigne une paroi sensiblement perpendiculaire aux plateaux, telle qu'obtenue par moulage par injection de matériau thermoplastique, et non un bourrelet qui pourrait être obtenu par déformation des plateaux, telle qu'on pourrait le réaliser par extrusion/soufflage ou par thermoformage.

Lorsque l'on parle d'un jeu de nervures issues des faces internes des plateaux les reliant entre eux par soudure, cela signifie qu'il y a continuité de matière à l'interface entre les nervures et lesdites faces internes.

La continuité de matière entre une nervure et une face interne de plateau est assurée soit par soudure soit du fait que la nervure peut être issue de matière du plateau quand il est obtenu par moulage.

Les nervures ne font donc qu'un bloc avec les plateaux supérieur et inférieur, ce qui permet d'obtenir de façon optimale « l'effet poutre » recherché.

La mise en oeuvre de nervures au sens sus décrit permet notamment de prévoir des agencements de nervures en croisillons et permet aussi une très grande liberté dans la disposition de nervures, ce qui permet de mettre le juste nécessaire en nervures, avec les avantages qui en découlent en termes d'allégement du panneau et de réduction des coûts de production.

Avec l'agencement proposé, on dispose d'une finition périphérique de la couche de revêtement qui est robuste et esthétique, ceci du fait du masquage du bord libre de la bande par le plateau inférieur.

Selon un deuxième aspect, l'invention propose un procédé de réalisation d'un tel panneau.

D'autres particularités et avantages de l'invention apparaîtront dans la description qui suit, faite en référence aux figures jointes, dans lesquelles :
- la figure 1a est une vue schématique en coupe d'un panneau selon une première réalisation, et la figure 1b une vue du même panneau en perspective partielle éclatée,
- la figure 2 est une vue schématique en perspective partielle éclatée d'un panneau selon une deuxième réalisation,
- la figure 3 est une vue schématique en perspective partielle d'un panneau selon une troisième réalisation,
- la figure 4a est une vue schématique en perspective partielle d'un panneau selon une quatrième réalisation et la figure 4b une vue en perspective partielle du même panneau en cours de réalisation.

En référence aux figures, on décrit un panneau 1 de garnissage de véhicule automobile - tel qu'un faux plancher ou une tablette de recouvrement des bagages -, ledit panneau comprenant une âme 2 structurelle à base de matériau thermoplastique, ladite âme comprenant :
- un plateau supérieur 3 pourvu d'un rebord périphérique tombant 4,
- un plateau inférieur 5,
- un jeu de nervures 6 issues des faces internes desdits plateaux les reliant entre eux par soudure à distance - par exemple de 10 à 25 mm - l'un de l'autre de manière à définir un volume intérieur 7 partiellement rempli par lesdites nervures,
ledit plateau supérieur présentant une face externe revêtue d'une couche de matériau de revêtement 8 - par exemple en moquette ou en tissu -, ladite couche s'étendant au delà dudit rebord pour former une bande 9 périphérique, ladite bande étant repliée vers l'intérieur et logée au moins en partie dans un espace 10 prévu en périphérie dudit volume intérieur, la périphérie 11 dudit plateau inférieur étant disposée en contact avec ladite bande de manière à masquer le bord libre 12 de ladite bande.

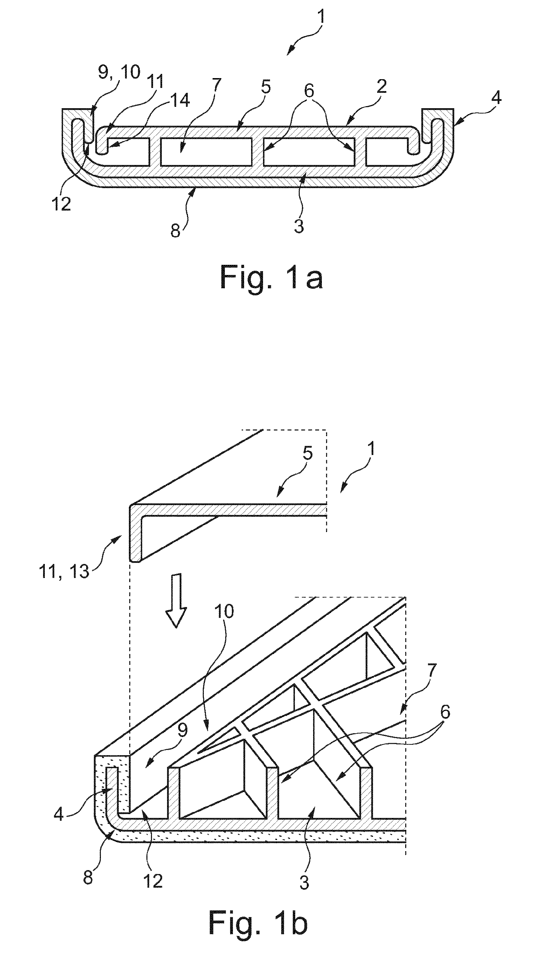

Selon la réalisation de la figure 1 le plateau inférieur 5 est pourvu d'un rebord périphérique ascendant 13, la bande 9 périphérique de revêtement étant coincée entre ledit rebord ascendant et le rebord tombant 4, ledit rebord tombant entourant ledit rebord ascendant.

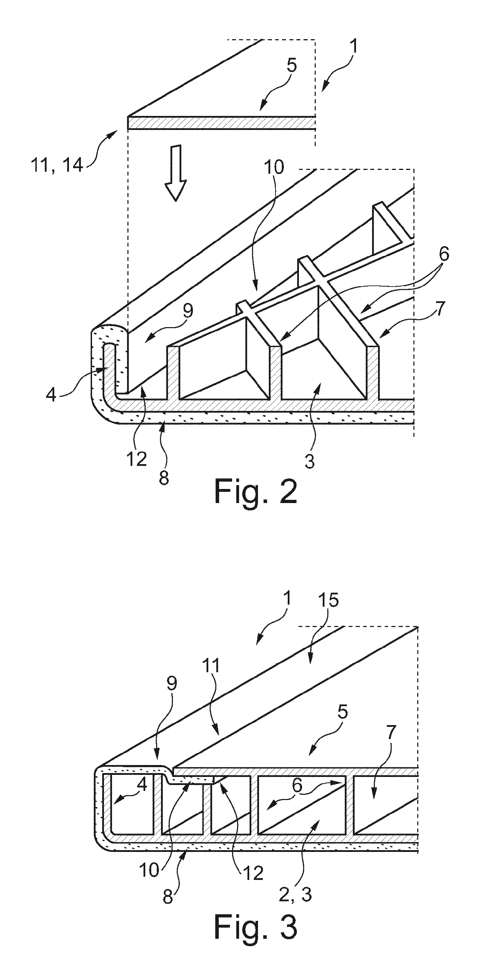

Selon la réalisation de la figure 2, le plateau inférieur 5 est sous forme de plaque - notamment obtenue par extrusion - la bande 9 périphérique de revêtement étant coincée entre le rebord tombant 4 et le bord 14 de ladite plaque.

La réalisation de la figure 3 est une variante de celle de la figure 2, la bande 9 périphérique de revêtement présentant une partie 15 non logée dans l'espace 10 prévu en périphérie du volume intérieur 7, de sorte que ladite partie soit visible en envers et en périphérie du panneau 1, ce qui lui confère une esthétique avantageuse.

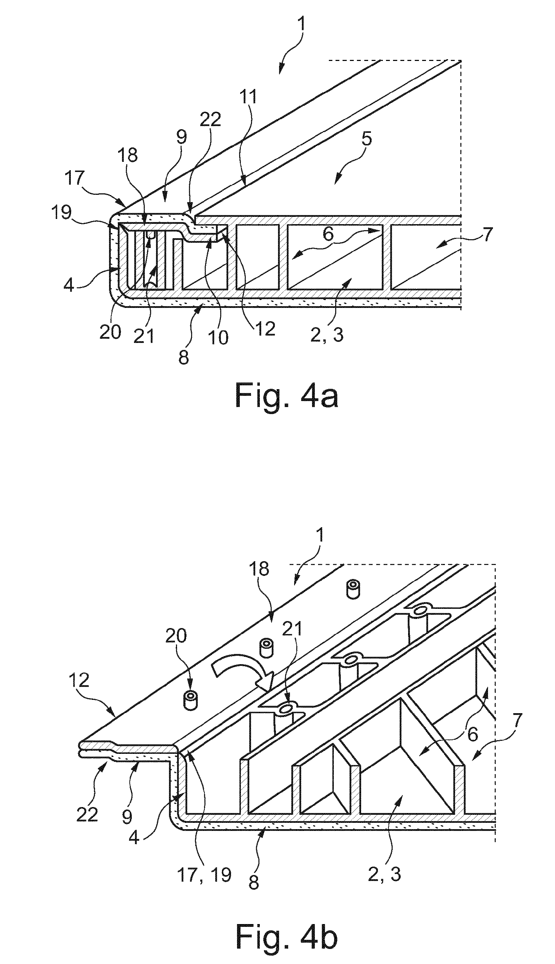

Selon la réalisation représentée en figures 4a et 4b, le bord libre 17 du rebord tombant 4 se prolonge par au moins un volet 18 issu de matière dudit rebord, ledit volet étant revêtu par la bande 9 périphérique de revêtement, ledit volet étant monté mobile en rotation par rapport audit rebord au moyen d'une charnière 19 souple formée par un pont de matière aminci, ledit volet étant replié vers l'intérieur et le plateau inférieur 5 recouvrant au moins partiellement ledit volet.

De façon non représentée, lorsque le bord libre 17 est non rectiligne, il peut être prévu plusieurs volets 18 disposés côte à côte pour réaliser la finition périphérique.

Selon la réalisation représentée, au moins un volet 18 est pourvu d'un moyen d'emboitement 20 - ici sous forme d'un doigt - coopérant avec un moyen réciproque 21 - ici sous forme d'un logement - prévu en envers du plateau supérieur 3 de manière à assurer un maintien - au moins temporaire - dudit volet en position repliée, ceci avant la mise en place du plateau inférieur 5.

Selon la réalisation représentée, le volet 18 est pourvu d'un décroché 22 de logement du plateau inférieur 5.

De façon non représentée, le plateau inférieur 5 peut être recouvert d'une couche de revêtement d'envers, par exemple à base de non tissé.

De façon non représentée, sur l'ensemble des modes de réalisation, un insert de rigidification - notamment métallique - peut être disposé entre les plateaux 3,5.

Comme mentionné précédemment, les nervures 6 peuvent être disposées en croisillons.

De façon non représentée, il peut être prévu des orifices dans les plateaux 3,5 de sorte que les volumes définis par les croisillons puissent former résonateurs de Helmoltz.

De façon non représentée, il peut être prévu de mettre un matériau poreux d'absorption acoustique dans le volume intérieur 7.

On décrit à présent un procédé de réalisation d'un panneau 1, ledit procédé comprenant les étapes suivantes :
- prévoir un plateau supérieur 3 pourvu d'un rebord périphérique tombant 4 et un plateau inférieur 5, lesdits plateaux étant en matériau thermoplastique, au moins un desdits plateaux étant obtenu par moulage par injection et étant pourvu de nervures 6 issues de sa face interne,
- revêtir ledit plateau supérieur d'une couche de matériau de revêtement 8, ladite couche s'étendant au delà dudit rebord pour former une bande 9 périphérique,
- replier ladite bande vers l'intérieur - de façon manuelle ou automatisée -,
- plaquer lesdits plateaux envers contre envers, la périphérie 11 dudit plateau inférieur étant disposée en contact avec ladite bande de manière à masquer le bord libre 12 de ladite bande,
- réaliser un mouvement oscillant - notamment de fréquence comprise entre 100 et 250 Hz - entre lesdits plateaux et parallèlement à eux de manière à réaliser une soudure par friction linéaire entre lesdits plateaux.

Selon une réalisation conduisant aux panneaux 1 représentés en figures 2 à 4 :
- le plateau inférieur 5 est réalisé par extrusion pour obtenir une plaque dépourvue de nervures, ladite plaque étant pourvue d'un matériau de revêtement qui lui est associé par calandrage à chaud,
- le plateau supérieur 3 est réalisé par moulage par injection et est pourvu de nervures 6.

Selon une réalisation, les deux plateaux 3,5 sont pourvus de nervures 6 agencées pour pouvoir s'emboiter les unes dans les autres avec un jeu parallèle auxdits plateaux compris entre 0,5 et 1,5 mm, ledit jeu permettant de réaliser la soudure par friction.

## Revendications

1. Panneau (1) de garnissage de véhicule automobile, ledit panneau comprenant une âme (2) structurelle à base de matériau thermoplastique, ladite âme comprenant :
• un plateau supérieur (3) pourvu d'un rebord périphérique tombant (4),
• un plateau inférieur (5),
• un jeu de nervures (6) issues des faces internes desdits plateaux les reliant entre eux par soudure à distance l'un de l'autre de manière à définir un volume intérieur (7) partiellement rempli par lesdites nervures,
ledit plateau supérieur présentant une face externe revêtue d'une couche de matériau de revêtement (8), ledit panneau étant **caractérisé en ce que** ladite couche s'étend au delà dudit rebord pour former une bande (9) périphérique, ladite bande étant repliée vers l'intérieur et logée au moins en partie dans un espace (10) prévu en périphérie dudit volume intérieur, la périphérie (11) dudit plateau inférieur étant disposée en contact avec ladite bande de manière à masquer le bord libre (12) de ladite bande.

2. Panneau selon la revendication 1, caractérisé en ce le plateau inférieur (5) est pourvu d'un rebord périphérique ascendant (13), la bande (9) périphérique de revêtement étant coincée entre ledit rebord ascendant et le rebord tombant (4), ledit rebord tombant entourant ledit rebord ascendant.

3. Panneau selon la revendication 1, **caractérisé en ce que** le plateau inférieur (5) est sous forme de plaque, la bande (9) périphérique de revêtement étant coincée entre le rebord tombant (4) et le bord (14) de ladite plaque.

4. Panneau selon la revendication 3, **caractérisé en ce que** la bande (9) périphérique de revêtement présente une partie (15) non logée dans l'espace (10) prévu en périphérie du volume intérieur (7), de sorte que ladite partie soit visible en envers et en périphérie du panneau (1).

5. Panneau selon la revendication 1, **caractérisé en ce que** le bord libre (17) du rebord tombant (4) se prolonge par au moins un volet (18) issu de matière dudit rebord, ledit volet étant revêtu par la bande (9) périphérique de revêtement, ledit volet étant monté mobile en rotation par rapport audit rebord au moyen d'une charnière (19) souple formée par un pont de matière aminci, ledit volet étant replié vers l'intérieur et le plateau inférieur (5) recouvrant au moins partiellement ledit volet.

6. Panneau selon la revendication 5, **caractérisé en ce qu'**au moins un volet (18) est pourvu d'un moyen d'emboitement (20) coopérant avec un moyen réciproque (21) prévu en envers du plateau supérieur (3) de manière à assurer un maintien dudit volet en position repliée.

7. Panneau selon la revendication 5 ou 6, **caractérisé en ce que** le volet (18) est pourvu d'un décroché (22) de logement de la périphérie (11) du plateau inférieur (5).

8. Procédé de réalisation d'un panneau selon l'une quelconque des revendications 1 à 7, ledit procédé comprenant les étapes suivantes :
• prévoir un plateau supérieur (3) pourvu d'un rebord périphérique tombant (4) et un plateau inférieur (5), lesdits plateaux étant en matériau thermoplastique, au moins un desdits plateaux étant obtenu par moulage par injection et étant pourvu de nervures (6) issues de sa face interne,
• revêtir ledit plateau supérieur d'une couche de matériau de revêtement (8), ladite couche s'étendant au delà dudit rebord pour former une bande (9) périphérique,
• replier ladite bande vers l'intérieur,
• plaquer lesdits plateaux envers contre envers, la périphérie (11) dudit plateau inférieur étant disposée en contact avec ladite bande de manière à masquer le bord libre (12) de ladite bande,
• réaliser un mouvement oscillant entre lesdits plateaux et parallèlement à eux de manière à réaliser une soudure par friction linéaire entre lesdits plateaux.
ledit procédé prévoyant en outre que :
• le plateau inférieur (5) est réalisé par extrusion pour obtenir une plaque dépourvue de nervures, ladite plaque étant pourvue d'un matériau de revêtement qui lui est associé par calandrage à chaud,
• le plateau supérieur (3) est réalisé par moulage par injection et est pourvu de nervures (6).
